# EUROPEAN PATENT SPECIFICATION

(11) **EP 0 676 249 B1**
(45) Date of publication and mention of the grant of the patent: **26.01.2000**
(21) Application number: 94306571.4
(22) Date of filing: 07.09.1994
(51) Int. Cl.: B05D 7/14

(54) **Coated fastener**
Beschichtetes Verbindungsstück
Attache revêtue

(30) Priority: 07.09.1993 US 116758
(43) Date of publication of application: 11.10.1995
(73) Proprietor: ILLINOIS TOOL WORKS INC., Glenview, Illinois 60025-5811 (US)
(72) Inventor: Kish, Frederick A., Wheeling, Illinois 60090 (US); Vadhar, Parimal M., Buffalo Grove, Illinois (US)
(74) Representative: Rackham, Stephen Neil

(56) References cited:
- EP-A- 0 112 277
- EP-A- 0 137 663
- EP-A- 0 409 419
- EP-A- 0 427 561
- CH-A- 628 533
- DE-A- 2 037 675
- DE-A- 2 118 181
- DE-B- 2 704 755
- US-A- 4 275 813
- US-A- 4 656 051
- US-A- 4 865 882
- US-A- 5 149 237
- US-A- 5 208 077

## Description

This invention relates generally to coated fasteners, and more particularly to a fastener, such as a staple or a nail, having a coating which covers substantially the entire exterior of the fastener, protects the fastener against corrosion, and is capable of adhering successive fasteners together into a strip or block.

Fasteners typically are coated to protect the fastener from corrosion and to adhere a plurality of fasteners together into a strip or block for ease of handling with a fastener driving tool. An example of such a coated fastener is illustrated in U.S. Patent No. 3,813,985 which discloses a coating composed of a nitro-cellulose resin dissolved in an organic solvent. After the solvent has evaporated the coating remains adhered to the fastener and can be utilized to adhere successive fasteners into a strip.

Upon evaporation of the solvent in such coatings, however, a large amount of undesirable volatile compounds are emitted. To conform to existing government regulations, the emitted volatile compounds must be contained and properly disposed which adds significant costs to the process.

It therefore would be desirable to provide a fastener having a coating which does not emit volatile compounds when applied and during curing, covers substantially the entire exterior surface of the fastener, protects the fastener against corrosion, adheres successive fasteners together in a strip.

According to this invention, a fastener has a coating thereon which is composed of one hundred percent solids, does not emit any volatile compounds when applied and cured, covers substantially the entire exterior of the fastener, protects the fastener against corrosion, enables the fastener to be adhered to at least one other fastener and provides an irregular surface to the fastener for increasing the holding power of the fastener after it is driven into a desired surface.

The coating is particularly useful when it first is applied to a plurality of metal wires which then are adhered together during curing of the coating to provide a band of adhered wires. The band then is formed to provide a strip of staples or nails for ease of shipping, packaging and loading into a driving tool. Upon separating a fastener from the strip, the irregular surface on the fastener is maintained to provide the increased holding power.

Particular embodiments of fasteners in accordance with this invention will now be described and contrasted with the prior art with reference to the accompanying drawings, in which:-
Figure 1 is a perspective view of a strip of fasteners including the coating of the invention;
Figure 2 is a cross sectional view of a portion of the strip of fasteners taken along line 2 - 2 of Figure 1 and in the direction indicated;
Figure 3 is a perspective view of a single fastener including the coating of the invention;
Figure 4 is a cross sectional view of the fastener taken along line 4 - 4 of Figure 3 and in the direction indicated;
Figure 5 is a perspective view of a plurality of fasteners including the coating of the invention illustrated driven into a desired surface;
Figure 6 is an enlarged partial side elevational view of a fastener including the coating of the invention illustrating the fastener after being removed from a desired surface; and
Figure 7 is an enlarged partial side elevational view of a prior art fastener after being removed from a desired surface.

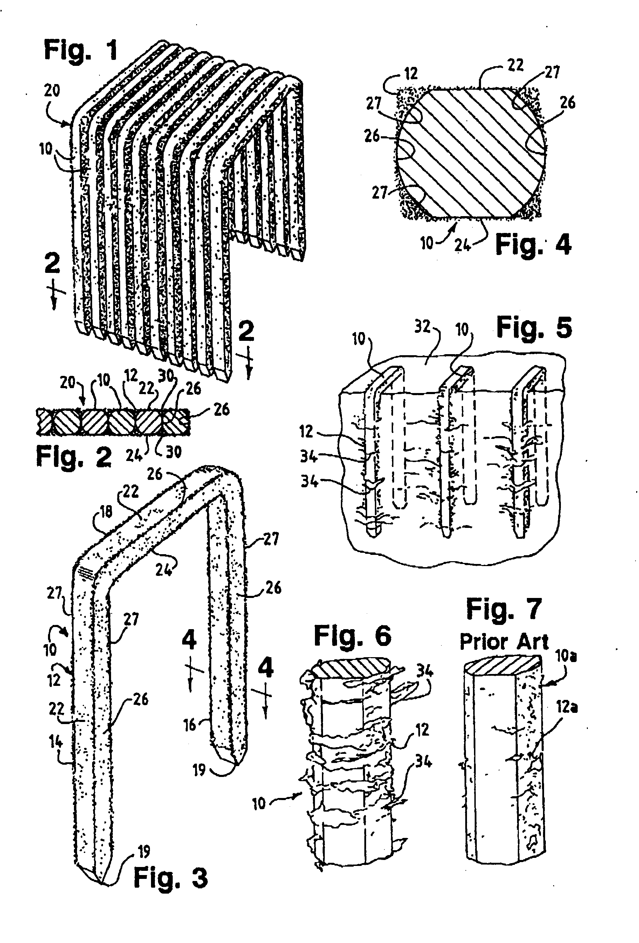

Referring to Figure 3, a fastener, such as a staple, is designated generally by the reference numeral 10 and includes a coating 12 of the invention thereon. Although the fastener 10 illustrated throughout the drawings is a staple, it is to be understood that any fastener can be utilised so long as the coating 12 is provided as described herein.

The staple 10 preferably includes first and second legs 14 and 16 inter-connected by a crown 18 and includes the coating 12 substantially about its entire exterior surface. Preferably, each leg 14 and 16 is formed with a chisel point 19 for driving of the staple into a desired surface, but can vary.

As Figure 1 illustrates, the staple 10 typically is provided in a strip or block 20 where the staples 10 are adhered together by the coating 12 during curing thereof. The strips 20 typically include between fifty and one hundred staples 10, but the number can vary.

As Figures 2 and 4 illustrate, each staple 10 preferably is substantially oval in cross sectional configuration including substantially planar side surfaces 22 and 24, opposite arcuate ends 26 and four arcuate corners 27. The particular size and shape of the staple 10, however, can vary.

The coating 12 is provided on the entire external periphery of the staple 10, preferably by the method and apparatus shown in co-pending European Application published as EP-A-0643998, claiming priority from U.S.S.N. 08/121,915). That method provides for application of the coating 12 in an electro-static process, wiping of excess coating 12 from desired portions of stock metal wires, curing the coating 12 by heating and subsequent cooling to adhere the coating 12 to the wires and adhere successive wires together into a band, and forming the band of wires into a strip 20 of staples 10. It is understood, however, that the particular method utilised to provide the coating 12 can vary.

As Figures 2 to 4 illustrate, the coating 12 preferably is slightly thinner on the side surfaces 22 and 24 and ends 26 than it is at the corners 27 of each fastener 10. The thicker coating on the corners 27 enhances adhesion with an adjacent staple and provides a substantially roughened surface which increases the retention of the staple 10 within a desired surface.

The thinner coating 12 on the side surfaces 22 and 24, and the arcuate ends 26 enables the exterior dimensions of the staple 10 to be reduced so the staple 10 will fit within the magazine and bore of a driving tool without jamming. Accordingly, the thickness of the coating 12 can vary depending on the particular application and driving tool utilised.

As Figure 2 illustrates, due to the shape of the staples 10, a recess 30 is provided between successive staples 10 on both side surfaces 22 and 24 thereof which substantially is filled with coating 12. The coating 12 in the recess provides for increased adhesion between staples 10 and, after a staple 10 is separated from a strip 20, provides the thicker coating on the corners 27. The width of the top of the coating within the recess 30 typically is about 0.76 to 1 mm (30 to 40 mils), while the depth is about 0.38 to 0.63 mm (15 to 25 mils), but can vary.

As Figures 5 and 6 illustrate, the coating 12 effectively provides a plurality of randomly spaced barbs on the opposite ends 26 which deform the material of a surface 32, such as wood, into which the staple 10 is driven. The barbs displace wood fibres 34 downward when driven, as Figure 5 illustrates, which in turn provides increased mechanical retention of the staple 10 within the wood.

As Figure 6 illustrates, the barbs of the coating 12 rip out substantial pieces of wood fibres 34 when removed. Conversely, as Figure 7 illustrates, a prior art staple 10a with a nitro-cellulose coating 12a does not provide the bars as does the coating 12 of the present invention and has less retention and fibres thereon.

The coating 12 can be a powder coating, a U.V. cured coating or a water based coating. Preferably, a powder coating is utilized which can be polyester, polyethylene, nylon or epoxy or any other material so long as it functions as described herein.

The preferred powder coating 12 is composed of polyester and is black in colour which enhances the curing rate in an IR oven. The polyester coating 12 includes, by weight, from about 80 to 90 percent polyester resin, 4 to 5 percent accelerator, 1 to 2 percent flow control agent, 3 to 4 percent dispensing agent and 1 percent surface open agent. The accelerator is utilised to increase the reaction rate during curing and preferably is hydroxy-alkyl amide. The flow control agent improves the flow and appearance of the coating and preferably is an acrylic based material. The dispensing agent preferably is stearic acid while the surface open agent is benzoin which allows the coating to de-gas during curing and reduce production of porous and brittle coatings.

The coating 12 preferably is non-conductive so that it can be applied electrostatically and is either black or blue in colour, but can vary. It also is conceivable that other thermosetting coatings, such as epoxy, can be utilised.

Furthermore, thermoplastic coatings can be utilised to form the coating 12, such as polyethylene or nylon, so long as the particle size of those materials is ground to be very fine. To obtain such fine particle sizes with thermoplastic materials, however, liquid nitrogen typically is utilised during grinding which adds significant costs to the material.

The following examples illustrate the coating 12 of the present invention.

### EXAMPLE I

| COMPONENTS | WEIGHT PERCENT |
|---|---|
| Polyester resin | 89.0 |
| Hydroxy-alkyl amide | 4.8 |
| Acrylic flow agent | 1.6 |
| Benzoin | 0.8 |
| Stearic acid | 3.8 |

The above coating composition provided excellent protection against corrosion, excellent coverage and adhesion between staples 10 and excellent retention within a surface.

### EXAMPLE II

| COMPONENTS | WEIGHT PERCENT |
|---|---|
| Epoxy resin | 50.0 - 70.0 |
| Aromatic amine | 10.0 - 30.0 |
| Carbon black | 1.0 - 5.0 |
| Calcium carbonate | 10.0 - 30.0 |
| Calcium sulfate | 10.0 - 30.0 |
| Bisphenol A | 5.0 - 10.0 |

As noted above, the coating 12 substantially increases the holding power of the staple 10 when driven into a given surface due to the pronounced barb formation provided by the coating 12 as illustrated in Figures 3, 5 and 6. The barbs on the coating 12 provide a mechanical lock which does not vary with time. The nitro-cellulose prior art coating of Figure 7 provides more of an adhesive or chemical inter-lock which will lose some of its holding power as the material relaxes after fastener insertion and deformation and upon drying of the material. This process typically occurs within two weeks time.

For example, tests have been conducted with staples 10 including the powder coating 12 thereon inserted within samples of spruce-pine-fir (SPF) wood and removed. Holding power was determined immediately after insertion. The following table summarises the results of those tests.

**TABLE I**

| HOLDING POWER OF POLYESTER POWDER COATED STAPLE IN SPF WOOD | | | | | | | | |
|---|---|---|---|---|---|---|---|---|
| SAMPLE NUMBER | FASTENER LENGTH | | PENETRATION DEPTH | | ULTIMATE PULL-OUT VALUE | | ADJUSTED PULL-OUT VALUE | |
| | (IN) | (MM) | (IN) | (MM) | (LBS) | (KG) | (LBS/IN) | (KG/MM) |
| 1 | .983 | 25 | .722 | 18.3 | 133 | 60.3 | 184.21 | 3.29 |
| 2 | .983 | 25 | .715 | 18.2 | 116 | 52.6 | 162.23 | 2.90 |
| 3 | .983 | 25 | .722 | 18.3 | 125 | 56.7 | 173.13 | 3.09 |
| 4 | .983 | 25 | .708 | 18.0 | 104 | 47.2 | 146.89 | 2.62 |
| 5 | .983 | 25 | .682 | 17.3 | 110 | 49.9 | 161.29 | 2.88 |
| 6 | .983 | 25 | .700 | 17.8 | 120 | 54.4 | 171.42 | 3.06 |
| 7 | .983 | 25 | .720 | 18.3 | 104 | 47.2 | 144.44 | 2.58 |
| 8 | .983 | 25 | .732 | 18.6 | 87 | 39.5 | 118.85 | 2.12 |
| 9 | .983 | 25 | .681 | 17.3 | 68 | 30.8 | 99.85 | 1.78 |
| 10 | .983 | 25 | .680 | 17.3 | 70 | 31.8 | 102.94 | 1.84 |

The adjusted pull out value is obtained by dividing the ultimate pull out value by the penetration depth to eliminate any variances from differences in the penetration depth. The mean adjusted pull out value for the above samples is 2.62 kg/mm (146.52 LBS/IN) with a standard deviation of 0.53 kg/mm (29.92 LBS/IN).

The mean adjusted pull out value of 2.62 kg/mm (146.52 LBS/IN) for the coating 12 is approximately 15% better than the mean adjusted pull out value for the same staple coated with a prior art nitro-cellulose based coating. Additionally, as described above, the nitro-cellulose relies more on an adhesive or chemical holding in the wood which loses some of its holding power, up to 30%, over time due to drying and relaxing of the wood. In contrast, the coating 12 of the invention loses only about 2 to 3% holding power over time.

## Claims

1. A coated fastener, comprising:
a fastener (10) having a predetermined configuration comprising a pair of oppositely disposed sides (22, 24), a pair of oppositely disposed ends (26) adapted to be adhered to similarly configured adjacent fasteners (10), corner portions (27) defined between adjacent ones of said sides (22, 24) and ends (26), and at least one portion (14, 16) capable of being driven into a desired surface (32); and
coating means (12), disposed upon said fastener (10), comprising one-hundred percent dry solids which are substantially free of solvent emissions when applied to said fastener (10) and during curing thereof, and covering substantially the entire exterior of said fastener (10), for providing a protective coating to said fastener (10) by having a first predetermined thickness of said coating means (12) upon at least said pair of sides (22, 24) and said pair of ends (26); and for adhering said fastener (10) to at least one other similarly configured fastener (10) and for providing an irregular surface to said fastener (10) for increasing the holding power of said fastener (10) after it is driven into said desired surface (32) by having a second predetermined thickness of said coating means (12), which is greater than said first predetermined thickness of said coating means (12), at said corner portions (27) of said fastener (10).

2. The fastener as defined in claim 1 wherein said coating means (12) is a powder coating selected from one of a thermosetting and a thermoplastic based material.

3. The fastener as defined in claim 1 or claim 2 wherein said coating means (12) is a polyester resin based coating.

4. The fastener as defined in claim 3 wherein said polyester coating is a powder including, by weight, from about 80-90 percent polyester resin, 4-5 percent accelerator, 1-2 percent flow control agent, 3-4 percent dispersing agent, and 1 percent surface active agent.

5. The fastener as defined in claim 4 wherein said accelerator is hydroxyalkyl amide, said flow control agent is an acrylic, said dispersing agent is stearic acid, and said surface active agent is benzoin.

6. The fastener as defined in claim 1 wherein said coating means (12) is an epoxy resin based coating.

7. The fastener as defined in claim 6 wherein said epoxy coating is a powder including, by weight, from about 50-70 percent epoxy resin, 10-30 percent aromatic amine, 1-5 percent pigment, 10-30 percent calcium carbonate, 10-30 percent calcium sulfate, and 5-10 percent bisphenol A.

8. The fastener as defined in claim 1 wherein said coating means (12) is at least one of polyethylene and nylon.

9. The fastener as defined in any one of the preceding claims wherein said coating means (12) provides a roughened surface about the exterior of said fastener (10).

10. The fastener as defined in any one of the preceding claims wherein said holding power of said fastener (10) remains substantially constant over time.

## Patentansprüche

1. Beschichtetes Befestigungsmittel, enthaltend:
ein Befestigungsmittel (10) mit einer vorbestimmten Ausgestaltung enthaltend ein Paar einander gegenüberliegend angeordneter Seiten (22, 24), ein Paar einander gegenüberliegend angeordneter Enden (26), welche so angepasst sind, dass sie an ähnlich ausgestalteten angrenzenden Befestigungsmitteln (10) befestigt werden können, Eckbereiche (27), welche zwischen angrenzenden Seiten (22, 24) und Enden (26) vorgesehen sind, und mindestens ein Bereich (14, 16), welcher in der Lage ist, in eine gewünschte Oberfläche (32) eingetrieben zu werden; und
Beschichtungsmittel (12), welche auf dem Befestigungsmittel (10) angeordnet sind, enthaltend zu 100 Prozent trockene Feststoffe, welche im Wesentlichen frei von Lösungsmittelemission sind, wenn sie auf das Befestigungsmittel (10) aufgetragen werden und während ihres Aushärtens, und welche im Wesentlichen die gesamte Außenfläche des Befestigungsmittels (10) bedecken, um für das Befestigungsmittel (10) eine schützende Beschichtung zu bilden, dadurch dass sich eine erste vorbestimmte Dicke der Beschichtungsmittel (12) auf mindestens dem Paar von Seiten (22, 24) und dem Paar von Enden (26) befindet; und um das Befestigungsmittel (10) an zumindest einem anderen ähnlich ausgestalteten Befestigungsmittel (10) anzuhaften, und um eine unregelmäßige Oberfläche auf dem Befestigungsmittel (10) vorzusehen, damit die Haltekraft des Befestigungsmittels (10) erhöht ist, nachdem es in die gewünschte Oberfläche (32) eingetrieben worden ist, dadurch, dass sich eine zweite vorbestimmte Dicke der Beschichtungsmittel (12), welche größer als die erste vorbestimmte Dicke der Beschichtungsmittel (12) ist, an den Eckbereichen (27) des Befestigungsmittels (10) befindet.

2. Befestigungsmittel nach Anspruch 1, bei welchem die Beschichtungsmittel (12) eine Pulverbeschichtung aus einem auf einem Duroplasten oder auf einem Thermoplasten basierenden Material ist.

3. Befestigungsmittel nach Anspruch 1 oder Anspruch 2, bei welchem die Beschichtungsmittel (12) eine auf Polyesterharz basierende Beschichtung ist.

4. Befestigungsmittel nach Anspruch 3, bei welchem die Polyesterbeschichtung ein Pulver mit ungefähr 80 bis 90 Gewichtsprozent Polyesterharz, 4 bis 5 Gewichtsprozent Beschleuniger, 1 bis 2 Gewichtsprozent Flußsteuermittel, 3 bis 4 Prozent Dispersionsmittel und 1 Gewichtsprozent oberflächenaktive Mittel enthält.

5. Befestigungsmittel nach Anspruch 4, bei welchem der Beschleuniger Hydroxylalkylamid, das Flußsteuermittel ein Acryl, das Dispersionsmittel Stearinsäure, und das oberflächenaktive Mittel Benzoin sind.

6. Befestigungsmittel nach Anspruch 1, bei welchem das Beschichtungsmittel (12) ein auf Epoxyharz basierende Beschichtung ist.

7. Befestigungsmittel nach Anspruch 6, bei welchem die Epoxybeschichtung ein Pulver - in Gewichtsprozenten - aus ungefähr 50 bis 70 Prozent Expoxyharz, 10 - 30 Prozent aromatischem Amin, 1 bis 5 Gewichtsprozent Pigment, 10 bis 30 Prozent Kalziumkarbonat, 10 bis 30 Prozent Kalziumsulfat, und 5 bis 10 Prozent Bisphenol A enthält.

8. Befestigungsmittel nach Anspruch 1, bei welchem die Beschichtungsmittel (12) mindestens aus Polyäthylen oder Polyamid (Nylon) bestehen.

9. Befestigungsmittel nach einem der vorhergehenden Ansprüche, bei welchem die Beschichtungsmittel (12) eine aufgerauhte Oberfläche um das Äußere des Befestigungsmittels (10) herum vorsehen.

10. Befestigungsmittel nach einem der vorhergehenden Ansprüche, bei welchem die Haltekraft des Befestigungsmittels (10) über die Zeit im Wesentlichen konstant bleibt.

## Revendications

1. Organe de fixation revêtu, comprenant:
un organe de fixation (10) présentant une configuration prédéterminée, comprenant une paire de côtés opposés (22, 24), une paire d'extrémités opposées (26) aptes à adhérer à des organes de fixation (10) adjacents et de configuration similaire, des parties de coin (27) définies entre un côté et une extrémité adjacents parmi lesdits côtés (22, 24) et extrémités (26), et au moins une partie (14, 16) pouvant être enfoncée dans une surface désirée (32); et
un moyen de revêtement (12), placé sur ledit organe de fixation (10), comprenant cent pour-cent de matières solides sèches qui n'entraînent sensiblement aucune émission de solvant lorsqu'elles sont appliquées sur ledit organe de fixation (10) et pendant leur chauffage, et couvrant sensiblement tout l'extérieur dudit organe de fixation (10), servant à former une couche protectrice dudit organe de fixation (10) par présence d'une première épaisseur prédéterminée dudit moyen de revêtement (12) sur au moins ladite paire de côtés (22, 24) et ladite paire d'extrémités (26); et servant à faire adhérer ledit organe de fixation (10) à au moins un autre organe de fixation (10) de configuration similaire, et à former une surface irrégulière dudit organe de fixation (10) en vue d'augmenter la résistance à l'arrachement dudit organe de fixation (10) une fois qu'il est enfoncé dans ladite surface désirée (32) par présence d'une deuxième épaisseur prédéterminée dudit moyen de revêtement (12), qui est supérieure à ladite première épaisseur prédéterminée dudit moyen de revêtement (12), au niveau desdites parties de coin (27) dudit organe de fixation (10).

2. Organe de fixation selon la revendication 1, dans lequel ledit moyen de revêtement (12) est un revêtement en poudre choisi parmi une matière thermodurcissable et une matière à base thermoplastique.

3. Organe de fixation selon la revendication 1 ou 2, dans lequel ledit moyen de revêtement (12) est un revêtement à base de résine polyester.

4. Organe de fixation selon la revendication 3, dans lequel ledit revêtement polyester est une poudre comprenant, en poids, à peu près 80-90% de résine polyester, 4-5% d'accélérateur, 1-2% d'agent stabilisant d'écoulement, 3-4% d'agent dispersant, et 1% d'agent tensioactif.

5. Organe de fixation selon la revendication 4, dans lequel ledit accélérateur est l'hydroxyalkyl amide, ledit agent stabilisant d'écoulement est un acrylique, ledit agent dispersant est l'acide stéarique, et ledit agent tensioactif est la benzoïne.

6. Organe de fixation selon la revendication 1, dans lequel ledit moyen de revêtement (12) est un revêtement à base de résine époxy

7. Organe de fixation selon la revendication 6, dans lequel ledit revêtement époxy est une poudre comprenant, en poids, à peu prés 50-70% de résine époxy, 10-30% d'amine aromatique, 1-5% de pigment, 10-30% de carbonate de calcium, 10-30% de sulfate de calcium, et 5-10% de bisphénol A.

8. Organe de fixation selon la revendication 1, dans lequel ledit moyen de revêtement (12) est au moins l'un du polyéthylène et du nylon.

9. Organe de fixation selon l'une quelconque des revendications précédentes, dans lequel ledit moyen de revêtement (12) forme une surface rugueuse autour de l'extérieur dudit organe de fixation (10).

10. Organe de fixation selon l'une quelconque des revendications précédentes, dans lequel ladite résistance à l'arrachement dudit organe de fixation (10) reste sensiblement constante au cours du temps.
